# EUROPEAN PATENT APPLICATION

(11) **EP 1 852 769 A1**
(43) Date of publication of application: **07.11.2007**
(21) Application number: 06113014.2
(22) Date of filing: 24.04.2006
(51) Int. Cl.: G06F 3/033, G06F 1/32

(54) **Electronic apparatus with a collapsible housing**

(71) Applicant: Darfon Electronics Corporation, Gueishan Taoyuan 333 (TW)
(72) Inventor: Chen, Ji-Huang, 325, Longtan Township, Taoyuan County (TW); Liao, Pin-Chien, 325, Longtan Township, Taoyuan County (TW)
(74) Representative: Kewitz, Ansgar

(57) **Abstract**

An electronic apparatus. A housing (110) includes a first end and a second end. A first cover (120) is connected to the first end. A second cover (130) is connected to the second end and first cover. The first and second covers operate between an open position and a closed position with respect to the housing. When the electronic apparatus is operated, the first cover (120) and second cover (130) are in the open position, facilitating holding by a user.

## Description

### BACKGROUND OF THE INVENTION

### Field of the Invention

The invention relates to an electronic apparatus, and in particular to an electronic apparatus with a first cover and a second cover operating with respect thereto.

### Description of the Related Art

Taiwan patent No. 343762 discloses a pointing device (mouse) with a middle portion capable of generating a gap, adjusting the length thereof. The height of the pointing device, however, cannot be adjusted.

### BRIEF SUMMARY OF THE INVENTION

A detailed description is given in the following embodiments with reference to the accompanying drawings.

An exemplary embodiment of the invention provides an electronic apparatus comprising a housing, a first cover, and a second cover. The housing comprises a first end and a second end. The first cover is connected to the first end. The second cover is connected to the second end and first cover. The first and second covers operate between an open position and a closed position with respect to the housing.

The first cover comprises a third end and a fourth end. The second cover comprises a fifth end and a sixth end. The third end is connected to the first end. The fifth end is connected to the fourth end of the first cover. The sixth end is connected to the second end.

The third end is rotatably connected to the first end. The fifth end is rotatably connected to the fourth end. The sixth end is slidably connected to the second end.

The electronic apparatus further comprises a first pivot and a second pivot. The second end comprises a sliding groove. The sixth end of the second cover comprises a sliding element. The first pivot is disposed between the third end and the first end. The second pivot is disposed between the fifth end and the fourth end. The sliding element slides in the sliding groove.

The third end is slidably connected to the first end. The fifth end is rotatably connected to the fourth end. The sixth end is slidably connected to the second end.

The electronic apparatus further comprises a pivot. The first and second ends respectively comprise a first sliding groove and a second sliding groove. The third end of the first cover comprises a first sliding element. The sixth end of the second cover comprises a second sliding element. The pivot is disposed between the fifth end and the fourth end. The first and second sliding elements respectively slide in the first and second sliding grooves.

The third end is rotatably connected to the first end. The fifth end is slidably connected to the fourth end. The sixth end is rotatably connected to the second end.

The electronic apparatus further comprises a first pivot and a second pivot. The fourth end of the first cover comprises a sliding groove. The fifth end of the second cover comprises a sliding element. The first pivot is disposed between the third end and the first end. The second pivot is disposed between the sixth end and the second end. The sliding element slides in the sliding groove.

The third end is rotatably connected to the first end. The fifth end is slidably connected to the fourth end. The sixth end is slidably connected to the second end.

The electronic apparatus further comprises a pivot. The fourth end of the first cover comprises a first sliding groove. The fifth end of the second cover comprises a first sliding element. The second end comprises a second sliding groove. The sixth end of the second cover comprises a second sliding element. The pivot is disposed between the third end and the first end. The first and second sliding elements respectively slide in the first and second sliding grooves.

The third end is slidably connected to the first end. The fifth end is slidably connected to the fourth end. The sixth end is slidably connected to the second end.

The first end comprises a first sliding groove. The third end of the first cover comprises a first sliding element. The fourth end of the first cover comprises a second sliding groove. The fifth end of the second cover comprises a second sliding element. The second end comprises a third sliding groove. The sixth end of the second cover comprises a third sliding element. The first, second, and third sliding elements respectively slide in the first, second, and third sliding grooves.

The electronic apparatus further comprises a bobbin and an engaging member. The bobbin is rotatably disposed in the housing. The engaging member is connected to the housing and detachably abuts the bobbin, positioning the bobbin.

The bobbin comprises an annular surface and a plurality of positioning portions uniformly disposed thereon. The engaging member comprises a fixed portion and a resilient abutting portion. The fixed portion is fixed to the housing. The resilient abutting portion detachably abuts one of the positioning portions.

The engaging member further comprises a release button opposite the resilient abutting portion and protruding from the housing. The resilient abutting portion is separated from one of the positioning portions by the release button.

The positioning portions comprise protrusions.

The housing further comprises a receiving groove receiving a connector.

The housing further comprises a resilient rib formed in the receiving groove, fixing the connector.

The receiving groove comprises a first groove portion and a second groove portion connected thereto and slantwise extending therefrom.

The electronic apparatus comprises a mouse, a handheld electronic device, or a cellular phone.

### BRIEF DESCRIPTION OF THE DRAWINGS

The invention can be more fully understood by reading the subsequent detailed description and examples with references made to the accompanying drawings, wherein:

FIG. 1A is a schematic perspective view of an electronic apparatus of a first embodiment of the invention;

FIG. 1B is another schematic perspective view of the electronic apparatus of the first embodiment of the invention;

FIG. 2A is a schematic side view of the electronic apparatus of the first embodiment of the invention;

FIG. 2B is a schematic side view of an electronic apparatus of a second embodiment of the invention;

FIG. 2C is a schematic side view of an electronic apparatus of a third embodiment of the invention;

FIG. 2D is a schematic side view of an electronic apparatus of a fourth embodiment of the invention;

FIG. 2E is a schematic side view of an electronic apparatus of a fifth embodiment of the invention;

FIG. 3A is a schematic perspective view showing the inner structure of the electronic apparatus of the first embodiment of the invention;

FIG. 3B is a schematic top view of FIG. 3A;

FIG. 3C is a schematic bottom view of FIG. 3A;

FIG. 3D is a schematic side view of FIG. 3A; and

FIG. 4 is a partial exploded perspective view of the electronic apparatus of the first embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

### First embodiment

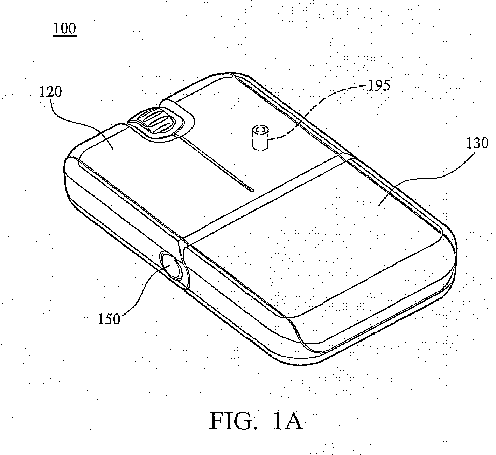

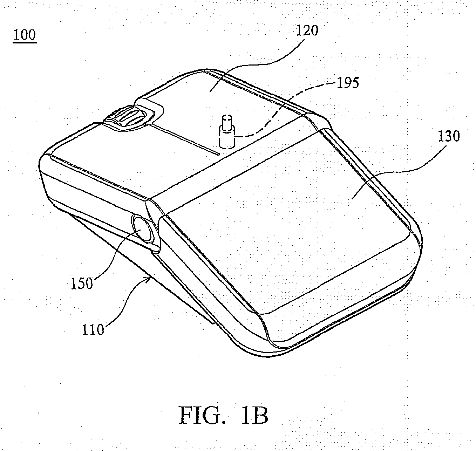

Referring to FIGs. 1A, 1B, 2A, and 3A, an electronic apparatus 100 comprises a housing 110, a first cover 120, a second cover 130, a first pivot 140, a second pivot 150, a bobbin 160, and an engaging member 170.

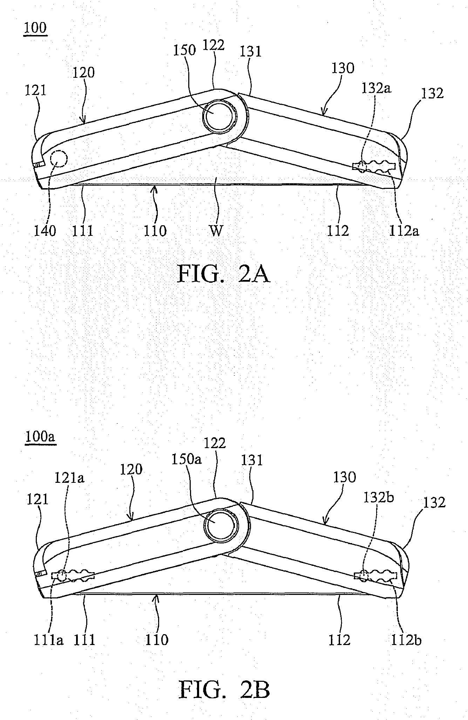

As shown in FIG. 2A, the housing 110 comprises a first end 111 and a second end 112 opposite thereto. Additionally, the second end 112 comprises a sliding groove 112a. The first end 111 and second end 112 are on a sidewall W of the housing 110. The sliding groove 112a of the second end 112 is formed on the sidewall W.

The first cover 120 is connected to the first end 111 of the housing 110 and comprises a third end 121 and a fourth end 122 opposite thereto. The third end 121 is rotatably connected to the first end 111 of the housing 110. Specifically, the first pivot 140 is disposed between the third end 121 and the first end 111, such that the first cover 120 can rotate with respect to the housing 110.

The second cover 130 is connected to the second end 112 of the housing 110 and first cover 120 and comprises a fifth end 131 and a sixth end 132 opposite thereto. The fifth end 131 is rotatably connected to the fourth end 122 of the first cover 120. The sixth end 132 is slidably connected to the second end 112 of the housing 110. Specifically, the second pivot 150 is disposed between the fifth end 131 of the second cover 130 and the fourth end 122 of the first cover 120. The sixth end 132 comprises a sliding element 132a sliding in the sliding groove 112a of the second end 112 of the housing 110. Accordingly, the second cover 130 can rotate with respect to the first cover 120 and slide with respect to the housing 110.

The first cover 120 and second cover 130 operate between an open position (FIG. 1B) and a closed position (FIG. 1A) with respect to the housing 110. When the electronic apparatus 100 is operated, the first cover 120 and second cover 130 are in the open position, facilitating holding by a user. When the electronic apparatus 100 is not operated, the first cover 120 and second cover 130 are in the closed position, facilitating transport and storage. Moreover, as shown in FIG. 2A, the sliding groove 112a of the housing 110 is elastic and comprises multiple recessed portions. The sliding element 132a of the second cover 130 selectively slides to one of the recessed portions of the sliding groove 112a, such that the first cover 120 and second cover 130 operate in different open positions with respect to the housing 110. Moreover, a spring (not shown) may be disposed near the first pivot 140 or second pivot 150, increasing resistance between the first cover 120 and the second cover 130. Thus, the first cover 120 and second cover 130 in the open position are not moved to the closed position due to unexpected operation.

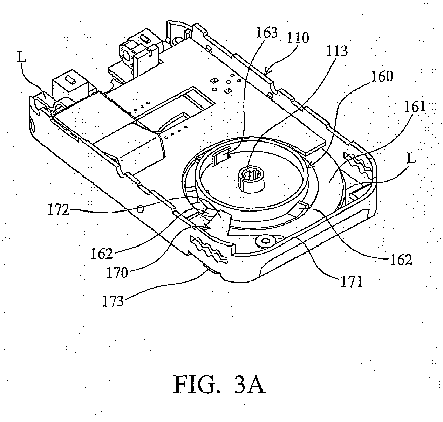

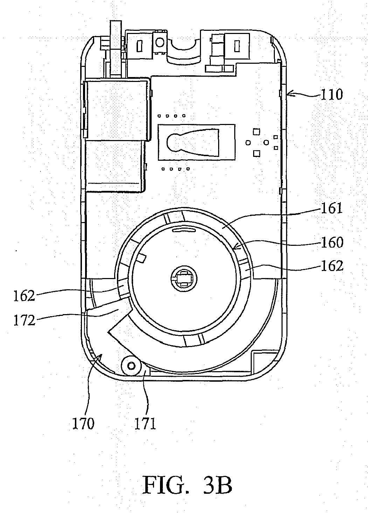

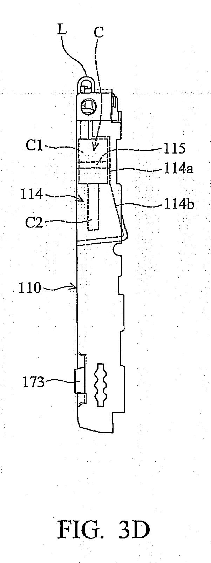

As shown in FIG. 3A and FIG. 3B, the bobbin 160 is rotatably disposed in the housing 110 and comprises an annular surface 161 and a plurality of positioning portions 162 uniformly disposed thereon. The positioning portions 162, in this embodiment, are protrusions. Additionally, a spiral spring (not shown) is disposed in the bobbin 160 and winds around a connecting pillar 113 disposed in the housing 110, connecting the connecting pillar 113 to a connecting portion 163 of the bobbin 160. Accordingly, after rotation or turning, the bobbin 160 returns to an initial position by resilience provided by the spiral spring. Moreover, a connecting wire L of a connector C (as shown in FIG. 3D) is wound on the annular surface 161 of the bobbin 160.

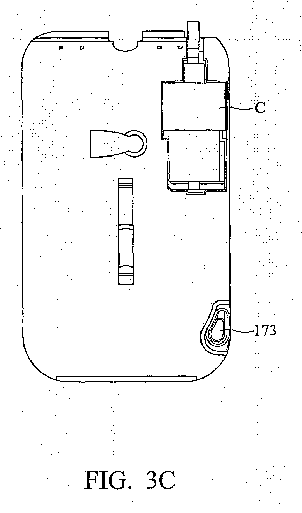

As shown in FIG. 3A, the engaging member 170 is connected to the housing 110 and detachably abuts the bobbin 160. Specifically, as shown in FIGs. 3A, 3B, 3C, and 3D, the engaging member 170 comprises a fixed portion 171, a resilient abutting portion 172, and a release button 173. The fixed portion 171 is fixed to the housing 110. The resilient abutting portion 172 detachably abuts one of the positioning portions 162 of the bobbin 160. The release button 173 is opposite the resilient abutting portion 172 and protrudes from the housing 110. Accordingly, when the connecting wire L of the connector C is pulled, the bobbin 160 is rotated thereby. When pulling of the connecting wire L is stopped, the resilient abutting portion 172 of the engaging member 170 abuts one of the positioning portions 162 of the bobbin 160, positioning the rotary position of the bobbin 160 and fixing the length of the connecting wire L pulled from the bobbin 160. In another aspect, when the connecting wire L returns into the housing 110, the release button 173 of the engaging member 170 can be pushed, separating the resilient abutting portion 172 thereof from the positioning portion 162. At this point, the bobbin 160 returns to the initial position by the resilience provided by the spiral spring, and the connecting wire L is wound on the annular surface 161 of the bobbin 160.

Moreover, as shown in FIG. 3D, the housing 110 comprises a receiving groove 114 and a resilient rib 115 formed therein. The receiving groove 114 receives the connector C, such as a USB connector. Specifically, the receiving groove 114 comprises a first groove portion 114a and a second groove portion 114b connected thereto and extending slantwise therefrom. The resilient rib 115 is formed on the wall of the first groove portion 114a. When the connector C is received in the receiving groove 114, the resilient rib 115 engages and fixes a main body C1 of the connector C. In another aspect, when the connector C is removed from the receiving groove 114, a connecting end C2 thereof is pressed, rotating toward the second groove portion 114b. The main body C1 is then separated from the resilient rib 115 and the connector C is removed from the receiving groove 114.

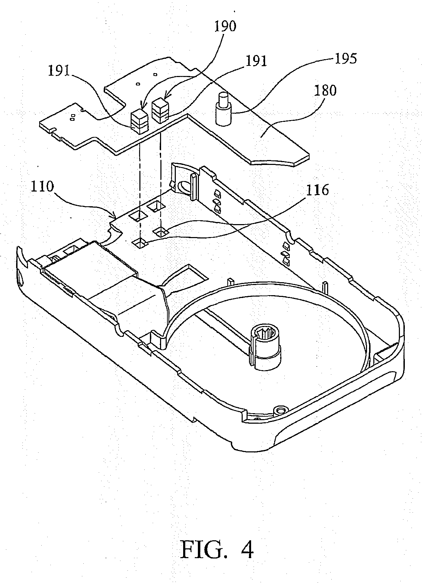

Moreover, as shown in FIG. 4, the electronic apparatus 100 comprises a circuit board 180 and the housing 110 comprises a plurality of through holes 116. The circuit board 180 is disposed in the housing 110 and supports multiple electronic elements 190. Specifically, each electronic element 190 comprises a protrusion (such as a pin) 191 corresponding to each through hole 116 on the housing 110. When the circuit board 180 and electronic elements 190 are disposed in the housing 110, the protrusions 191 of the electronic elements 190 are received in the through holes 116 of the housing 110, respectively. Accordingly, the height of the housing 110 is reduced, such that the height of the electronic apparatus 100 is reduced. Moreover, the electronic apparatus 100 may be a mouse, a handheld electronic device, or a cellular phone.

Additionally, as shown in FIG. 4, being a wireless optical mouse, the electronic apparatus 100 may further comprise a switch 195 disposed on and electrically connected to the circuit board 180. When the switch 195 is depressed by the first cover 120, main power of the mouse is cut off. When the switch 195 is released by the first cover 120, the main power of the optical mouse is recovered. The switch 195 controls main power supplied from the circuit board 180 into a control unit (not shown), an optical sensor (not shown), a wireless transportation module (not shown), etc.

Specifically, when the electronic apparatus 100 is not operated, as shown in FIG. 1A, the switch 195 is pressed by the first cover 120, thereby stopping the power from supplying into the control unit, optical sensor, wireless transportation module, etc. In another aspect, when the electronic apparatus 100 is operated, as shown in FIG. 1B, the switch 195 is released, such that the circuit board 180 supplies the power into the control unit, optical sensor, wireless transportation module, etc.

### Second embodiment

Elements corresponding to those in the first embodiment share the same reference numerals.

As shown in FIG. 2A and FIG. 2B, an electronic apparatus 100a differs from the electronic apparatus 100 in that connection between the housing, first cover, and second cover is different.

As shown in FIG. 2B, the third end 121 of the first cover 120 is slidably connected to the first end 111 of the housing 110. The fifth end 131 of the second cover 130 is rotatably connected to the fourth end 122 of the first cover 120. The sixth end 132 of the second cover 130 is slidably connected to the second end 112 of the housing 110. Specifically, the first end 111 and second end 112 respectively comprise a first sliding groove 111a and a second sliding groove 112b, the third end 121 comprises a first sliding element 121a, and the sixth end 132 comprises a second sliding element 132b. A pivot 150a is disposed between the fifth end 131 and the fourth end 122, rotating the first cover 120 with respect to the second cover 130. The first sliding element 121 a and second sliding element 132b respectively slide in the first sliding groove 111a and second sliding groove 112b, such that the first cover 120 and second cover 130 slide with respect to the housing 110.

Accordingly, the first cover 120 and second cover 130 operate between an open position and a closed position with respect to the housing 110.

Similarly, the first sliding groove 111a and second sliding groove 112b respectively comprise multiple recessed portions. The first sliding element 121 a of the first cover 120 selectively slides to one of the recessed portions of the first sliding groove 111 a, and the second sliding element 132b of the second cover 130 selectively slides to one of those of the second sliding groove 112b. Accordingly, the first cover 120 and second cover 130 can operate in different open positions with respect to the housing 110.

Similarly, the electronic apparatus 100a may be a mouse, a handheld electronic device, or a cellular phone.

Structure, disposition, and function of other elements of the electronic apparatus 100a are the same as those of the electronic apparatus 100, and explanation thereof is omitted for simplicity.

### Third embodiment

Elements corresponding to those in the first embodiment share the same reference numerals.

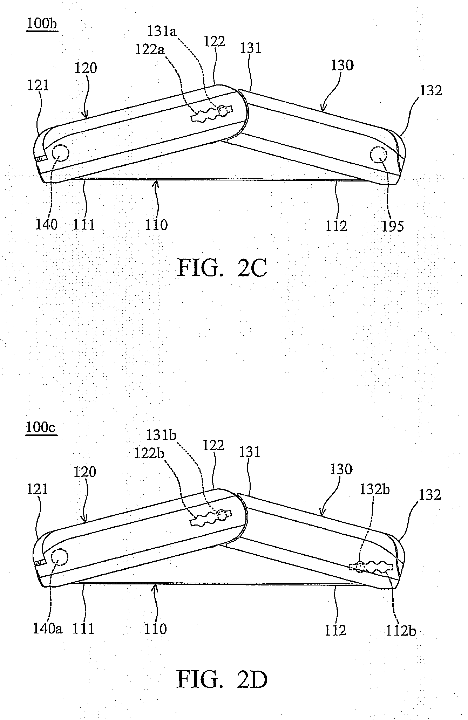

As shown in FIG. 2A and FIG. 2C, an electronic apparatus 100b differs from the electronic apparatus 100 in that connection between the housing, first cover, and second cover is different.

As shown in FIG. 2C, the third end 121 of the first cover 120 is rotatably connected to the first end 111 of the housing 110. The fifth end 131 of the second cover 130 is slidably connected to the fourth end 122 of the first cover 120. The sixth end 132 of the second cover 130 is rotatably connected to the second end 112 of the housing 110. Specifically, the fourth end 122 comprises a sliding groove 122a and the fifth end 131 comprises a sliding element 131 a sliding therein. Accordingly, the first cover 120 can slide with respect to the second cover 130. A first pivot 140 is disposed between the third end 121 and the first end 111, such that the first cover 120 rotates with respect to the housing 110. A second pivot 195 is disposed between the sixth end 132 and the second end 112, such that the second cover 130 rotates with respect to the housing 110.

Accordingly, the first cover 120 and second cover 130 operate between an open position and a closed position with respect to the housing 110.

Similarly, the sliding groove 122a of the first cover 120 comprises multiple recessed portions. The sliding element 131a of the second cover 130 selectively slides to one of the recessed portions of the sliding groove 122a. Accordingly, the first cover 120 and second cover 130 can operate in different open positions with respect to the housing 110.

Similarly, the electronic apparatus 100b may be a mouse, a handheld electronic device, or a cellular phone.

Structure, disposition, and function of other elements of the electronic apparatus 100b are the same as those of the electronic apparatus 100, and explanation thereof is omitted for simplicity.

### Fourth embodiment

Elements corresponding to those in the first embodiment share the same reference numerals.

As shown in FIG. 2A and FIG. 2D, an electronic apparatus 100c differs from the electronic apparatus 100 in that connection between the housing, first cover, and second cover is different.

As shown in FIG. 2D, the third end 121 of the first cover 120 is rotatably connected to the first end 111 of the housing 110. The fifth end 131 of the second cover 130 is slidably connected to the fourth end 122 of the first cover 120. The sixth end 132 of the second cover 130 is slidably connected to the second end 112 of the housing 110. Specifically, the fourth end 122 comprises a first sliding groove 122b, the second end 112 comprises a second sliding groove 112b, the fifth end 131 comprises a first sliding element 131b, and the sixth end 132 comprises a second sliding element 132b. The first sliding element 131b and second sliding element 132b respectively slide in the first sliding groove 122b and second sliding groove 112b, such that the second cover 130 respectively slide with respect to the first cover 120 and housing 110. A pivot 140a is disposed between the third end 121 and the first end 111, rotating the first cover 120 with respect to the housing 110.

Accordingly, the first cover 120 and second cover 130 operate between an open position and a closed position with respect to the housing 110.

Similarly, the first sliding groove 122b of the first cover 120 and second sliding groove 112b of the housing 110 respectively comprise multiple recessed portions. The first sliding element 131b and second sliding element 132b of the second cover 130 respectively and selectively slide to one of the recessed portions of the first sliding groove 122b and second sliding groove 112b. Accordingly, the first cover 120 and second cover 130 can operate in different open positions with respect to the housing 110.

Similarly, the electronic apparatus 100c may be a mouse, a handheld electronic device, or a cellular phone.

Structure, disposition, and function of other elements of the electronic apparatus 100c are the same as those of the electronic apparatus 100, and explanation thereof is omitted for simplicity.

### Fifth embodiment

Elements corresponding to those in the first embodiment share the same reference numerals.

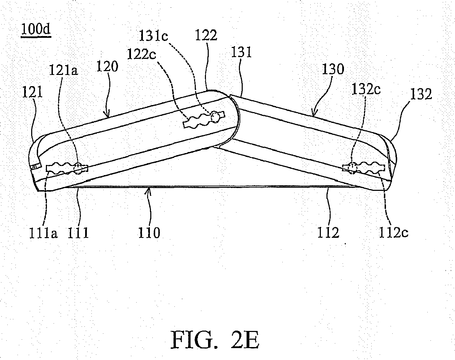

As shown in FIG. 2A and FIG. 2E, an electronic apparatus 100d differs from the electronic apparatus 100 in that connection between the housing, first cover, and second cover is different.

As shown in FIG. 2E, the third end 121 of the first cover 120 is slidably connected to the first end 111 of the housing 110. The fifth end 131 of the second cover 130 is slidably connected to the fourth end 122 of the first cover 120. The sixth end 132 of the second cover 130 is slidably connected to the second end 112 of the housing 110. Specifically, the first end 111 comprises a first sliding groove 111 a, the third end 121 comprises a first sliding element 121a, the fourth end 122 comprises a second sliding groove 122c, the fifth end 131 comprises a second sliding element 131 c, the second end 112 comprises a third sliding groove 112c, and the sixth end 132 comprises a third sliding element 132c. The first sliding element 121a, second sliding element 131c, and third sliding element 132c respectively slide in the first sliding groove 111 a, second sliding groove 122c, and third sliding groove 112c, such that the first cover 120, second cover 130, and housing 110 slide with respect to each other.

Accordingly, the first cover 120 and second cover 130 operate between an open position and a closed position with respect to the housing 110.

Similarly, the first sliding groove 111a, second sliding groove 122c, and third sliding groove 112c respectively comprise multiple recessed portions. The first sliding element 121 a, second sliding element 131c, and third sliding element 132c respectively and selectively slide to one of the recessed portions of the first sliding groove 111a, second sliding groove 122c, and third sliding groove 112c. Accordingly, the first cover 120 and second cover 130 can operate in different open positions with respect to the housing 110.

Similarly, the electronic apparatus 100d may be a mouse, a handheld electronic device, or a cellular phone.

Structure, disposition, and function of other elements of the electronic apparatus 100d are the same as those of the electronic apparatus 100, and explanation thereof is omitted for simplicity.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An electronic apparatus, comprising:
a housing comprising a first end and a second end;
a first cover connected to the first end; and
a second cover connected to the second end and first cover, wherein the first and second covers operate between an open position and a closed position with respect to the housing.

2. The electronic apparatus as claimed in claim 1, wherein the first cover comprises a third end and a fourth end, the second cover comprises a fifth end and a sixth end, the third end is connected to the first end, the fifth end is connected to the fourth end of the first cover, and the sixth end is connected to the second end.

3. The electronic apparatus as claimed in claim 2, wherein the third end is rotatably connected to the first end, the fifth end is rotatably connected to the fourth end, and the sixth end is slidably connected to the second end.

4. The electronic apparatus as claimed in claim 3, wherein the electronic apparatus further comprises a first pivot and a second pivot, the second end comprises a sliding groove, the sixth end of the second cover comprises a sliding element, the first pivot is disposed between the third end and the first end, the second pivot is disposed between the fifth end and the fourth end, and the sliding element slides in the sliding groove.

5. The electronic apparatus as claimed in claim 2, wherein the third end is slidably connected to the first end, the fifth end is rotatably connected to the fourth end, and the sixth end is slidably connected to the second end.

6. The electronic apparatus as claimed in claim 5, wherein the electronic apparatus further comprises a pivot, the first and second ends respectively comprise a first sliding groove and a second sliding groove, the third end of the first cover comprises a first sliding element, the sixth end of the second cover comprises a second sliding element, the pivot is disposed between the fifth end and the fourth end, and the first and second sliding elements respectively slide in the first and second sliding grooves.

7. The electronic apparatus as claimed in claim 2, wherein the third end is rotatably connected to the first end, the fifth end is slidably connected to the fourth end, and the sixth end is rotatably connected to the second end.

8. The electronic apparatus as claimed in claim 7, wherein the electronic apparatus further comprises a first pivot and a second pivot, the fourth end of the first cover comprises a sliding groove, the fifth end of the second cover comprises a sliding element, the first pivot is disposed between the third end and the first end, the second pivot is disposed between the sixth end and the second end, and the sliding element slides in the sliding groove.

9. The electronic apparatus as claimed in claim 2, wherein the third end is rotatably connected to the first end, the fifth end is slidably connected to the fourth end, and the sixth end is slidably connected to the second end.

10. The electronic apparatus as claimed in claim 9, wherein the electronic apparatus further comprises a pivot, the fourth end of the first cover comprises a first sliding groove, the fifth end of the second cover comprises a first sliding element, the second end comprises a second sliding groove, the sixth end of the second cover comprises a second sliding element, the pivot is disposed between the third end and the first end, and the first and second sliding elements respectively slide in the first and second sliding grooves.

11. The electronic apparatus as claimed in claim 2, wherein the third end is slidably connected to the first end, the fifth end is slidably connected to the fourth end, and the sixth end is slidably connected to the second end.

12. The electronic apparatus as claimed in claim 11, wherein the first end comprises a first sliding groove, the third end of the first cover comprises a first sliding element, the fourth end of the first cover comprises a second sliding groove, the fifth end of the second cover comprises a second sliding element, the second end comprises a third sliding groove, the sixth end of the second cover comprises a third sliding element, and the first, second, and third sliding elements respectively slide in the first, second, and third sliding grooves.

13. The electronic apparatus as claimed in claim 1, further comprising a bobbin and an engaging member, wherein the bobbin is rotatably disposed in the housing, and the engaging member is connected to the housing and detachably abuts the bobbin, positioning the bobbin.

14. The electronic apparatus as claimed in claim 13, wherein the bobbin comprises an annular surface and a plurality of positioning portions uniformly disposed thereon, the engaging member comprises a fixed portion and a resilient abutting portion, the fixed portion is fixed to the housing, and the resilient abutting portion detachably abuts one of the positioning portions.

15. The electronic apparatus as claimed in claim 14, wherein the engaging member further comprises a release button opposite the resilient abutting portion and protruding from the housing, and the resilient abutting portion is separated from one of the positioning portions by the release button.

16. The electronic apparatus as claimed in claim 14, wherein the positioning portions comprise protrusions.

17. The electronic apparatus as claimed in claim 1, wherein the housing further comprises a receiving groove receiving a connector.

18. The electronic apparatus as claimed in claim 17, wherein the housing further comprises a resilient rib formed in the receiving groove, fixing the connector.

19. The electronic apparatus as claimed in claim 18, wherein the receiving groove comprises a first groove portion and a second groove portion connected thereto and extending slantwise therefrom.

20. The electronic apparatus as claimed in claim 1, wherein the electronic apparatus comprises a mouse.

21. An electronic apparatus, comprising:
a housing;
a bobbin comprising an annular surface and a plurality of positioning portions uniformly disposed thereon; and
an engaging member comprising a fixed portion and a resilient abutting portion, wherein the fixed portion is fixed to the housing, and the resilient abutting portion detachably abuts one of the positioning portions.

22. The electronic apparatus as claimed in claim 21, wherein the engaging member further comprises a release button opposite the resilient abutting portion and protruding from the housing, and the resilient abutting portion is separated from one of the positioning portions by the release button.

23. The electronic apparatus as claimed in claim 21, wherein the electronic apparatus comprises a mouse.

24. An electronic apparatus, comprising:
a housing; and
a receiving groove receiving a connector and comprising a first groove portion and a second groove portion connected thereto and extending slantwise therefrom.

25. The electronic apparatus as claimed in claim 24, wherein the electronic apparatus comprises a mouse.

26. An electronic apparatus, comprising:
a housing comprising at least one through hole;
a circuit board disposed in the housing; and
an element disposed on the circuit board and comprising a protrusion corresponding to and received in the through hole.

27. The electronic apparatus as claimed in claim 26, wherein the electronic apparatus comprises a mouse.

28. The electronic apparatus as claimed in claim 1, further comprising a switch disposed in the housing, wherein main power of the electronic apparatus is cut off when the switch is depressed by the first cover, and the main power of the electronic apparatus is recovered when the switch is released.
